# EUROPÄISCHE PATENTANMELDUNG

(11) **EP 2 648 257 A1**
(43) Veröffentlichungstag der Anmeldung: **09.10.2013**
(21) Anmeldenummer: 13162164.1
(22) Anmeldetag: 03.04.2013
(51) Int. Cl.: H01M 8/18, H01M 8/20

(54) **Durchflussbatterie, elektrochemischer Energiewandler für eine Durchflussbatterie, Zellrahmen und Bipolarplatte sowie Kollektorplatte**

(30) Priorität: 03.04.2012 DE 102012006642
(71) Anmelder: Bozankaya BC&C, 38239 Salzgitter (DE)
(72) Erfinder: Rudolph, Stephan, 38459 Bahrdorf (DE)
(74) Vertreter: Einsel, Martin

(57) **Zusammenfassung**

Die Erfindung betrifft eine Durchflussbatterie (1) oder einen elektrochemischen Energiewandler (2) für eine Durchflussbatterie (1), insbesondere eine Redox-Flow-Batterie, mit einer Zirkulationsanordnung für Elektrolyten (33), Elektrolytleitungen (3) zur Zu- und Abführung (X) eines oder mehrerer Elektrolyten (33) von einem Vorratstank (31, 32) zu dem elektrochemischen Energiewandler (2) und weiter zurück in den jeweiligen Vorratstank (31, 32) in Form eines Kreislaufprozesses, wobei der elektrochemische Energiewandler (2) mindestens eine Reaktionszelle mit zwei Elektroden, nämlich Bipolarplatte (25) und/oder Kollektorplatte (26), und einer ionenleitenden Membran (23), bevorzugt eine Vielzahl von elektrisch zusammengeschalteten Einzelzellen umfasst, wobei diese bevorzugt mit Elektrolyten (33) in Parallelschaltung versorgt sind, und die jeweils einen Einlassbereich (301) zur Einleitung des Elektrolyten (33) und einen Auslassbereich (302) zur Ausleitung des Elektrolyten (33) aufweist.

Ferner betrifft die Erfindung einen Zellrahmen (27) für einen elektrochemischen Energiewandler (2) einer Durchflussbatterie sowie eine Bipolarplatte (25) und/oder eine Kollektorplatte (26) für einen elektrochemischen Energiewandler (2) einer Durchflussbatterie (1).

## Beschreibung

Die Erfindung betrifft eine Durchflussbatterie oder einen elektrochemischen Energiewandler für eine Durchflussbatterie, insbesondere eine Redox-Flow-Batterie, mit einer Zirkulationsanordnung für Elektrolyten, Elektrolytleitungen zur Zu- und Abführung eines oder mehrerer Elektrolyten von einem Vorratstank zu dem elektrochemischen Energiewandler und weiter zurück in den jeweiligen Vorratstank in Form eines Kreislaufprozesses, wobei der elektrochemische Energiewandler mindestens eine Reaktionszelle mit zwei Elektroden, nämlich Bipolarplatten und/oder Kollektorplatten, und einer ionenleitenden Membran, bevorzugt eine Vielzahl von elektrisch zusammengeschalteten Einzelzellen umfasst, wobei diese bevorzugt mit Elektrolyten in Parallelschaltung versorgt werden, und die jeweils einen Einlassbereich zur Einleitung des Elektrolyten in die Reaktionszelle und einen Auslassbereich zur Ausleitung des Elektrolyten aus der Reaktionszelle aufweisen.

Ferner betrifft die Erfindung einen Zellrahmen für einen elektrochemischen Energiewandler einer Durchflussbatterie sowie eine Bipolarplatte und/oder eine Kollektorplatte für einen elektrochemischen Energiewandler einer Durchfluss-batterie.

Die Erfindungen betreffen allesamt die Zu- und Abführung der Elektrolyten in den Reaktionsraum bzw. aus dem Reaktionsraum heraus.

Eine Durchflussbatterie ist eine wiederaufladbare Batterie, bei der die Energie chemisch in flüssigen Elektrolyten (salzhaltige wässrige Lösungen) gespeichert wird bzw. ist. Durchflussbatterien (flow battery) werden auch als Redox-Durchflussbatterien oder nur als Redox-Batterien bezeichnet, wenn in ihnen eine Reduktion und eine Oxidation abläuft.

Bei diesen Batterietypen werden Tanks zur Bevorratung der Elektrolyten vorgesehen, in denen sich das gesamte reaktive Material in flüssiger Form befindet. Beim Laden und Entladen werden die Elektrolyten in einem geschlossenen Kreislaufsystem transportiert, wobei elektrische Energie in chemisch gebundener Form dem System entzogen bzw. hinzugefügt wird (Reduktion/Oxidation), so dass ein chemischer Energiespeicher realisiert ist. Das Kreislaufsystem umfasst neben den Vorratsbehältern für die Elektrolyten auch Rohrleitungssysteme, die Elektrolytleitungen, in denen die Elektrolyten mittels Pumpen oder dgl. transportiert werden.

Es gibt zwei Elektrolyten, einen für die positive Reaktion und einen für die negative Reaktion. Die beiden Elektrolyten werden nicht miteinander vermischt, sondern sind in einer Reaktionszelle, dem elektrochemischen Reaktionsraum, durch eine sehr dünne Membran voneinander getrennt. Die sehr dünne Membran ist eine ionenleitende Membran, die ausgewählte Ionen von einer zur anderen Seite durchlässt.

Im elektrochemischen Reaktionsraum befinden sich weiterhin auch sehr stabile Elektroden an denen die kritischen Reaktionen ablaufen. Da die Reaktionen nur die gelösten Salze betreffen, unterliegen die Elektroden selbst keiner chemischen oder physikalischen Veränderung, weshalb eine große Anzahl an Lade- und Entladezyklen möglich ist, ohne dass dabei eine signifikante Abnahme der Kapazität erfolgt.

Diese Elektroden werden auch als poröse Kohlenstoffelektroden oder als Kollektoren bezeichnet. Zu beachten ist, dass es neben diesen Kollektoren, welche an dem elektrochemischen Prozess teilnehmen, noch weitere Kollektoren gibt, welche eben nur den elektrischen Strom aufnehmen.

Die Redox-Durchflussbatterien unterscheidet sich darin auch von Hybrid-Durchflussbatterien (wie z.B. Zink-Brom Systemen), welche eine reaktive Elektrode besitzen und damit ebenfalls von Einschränkungen konventioneller Batterietechnologien betroffen sind, da diese Elektroden mit der Zeit stark abnutzen.

Ein sehr spezieller Typ von Redox-Durchflussbatterien ist die Vanadium-Redox-Durchflussbatterie. Die Vanadium-Salze sind im negativen als auch im positiven Elektrolyten in unterschiedlichen Oxidationsstufen vorhanden. Insbesondere ist Vanadium durch seine vier ausgezeichneten unterschiedlichen Oxidationsstufen, in denen es stabile Lösungen ausbildet, besonders gut geeignet, um als chemischer Speicher in Durchflussbatterien zu fungieren. Eine entsprechende Durchfluss-Batterie mit diesen Vanadium-Elektrolyten erreicht quasi beliebig viele Zyklen der Auf- und Entladung, wobei gleichzeitig eine sehr hohe Energiedichte pro Volumen beziehungsweise pro Masse erreicht wird.

Derartige Vanadium-Redox-Durchflussbatterien sind für die Energieversorgung von Elektromotoren in Kraftfahrzeugen besonders sinnvoll, da es zumindest physikalisch möglich erscheint, dass diese Energiespeicher eine ausreichende elektrische Energiemenge speichern können, um realistisch nutzbare und sinnvolle Reichweiten eines Kraftfahrzeuges bis zur nächsten Wiederaufladung zu erreichen. Weitere interessante Anwendungsgebiete sind beispielsweise die Speicherung elektrischer Energie in Haushalten, die photovoltaische Anlagen betreiben, oder beispielsweise Windenergieanlagen oder -parks. Auch der Einsatz als sehr großer Energiespeicher ist sinnvoll und zudem äußerst effizient. Beispielsweise können ganze Fabriken mit Energie über einen gewissen Zeitraum versorgt werden, ohne dass es zu einer Stromunterbrechung kommt.

Derartige Durchflussbatterien sind bereits in den 1950 er Jahren in ersten Ansätzen in der Druckschrift DE 914 264 C beschrieben worden. Hier ist die chemische Speicherung von Energie mittels Reduktion und Oxidation beispielhaft beschrieben. Weiter wird hier ein Gas zum Transportieren der Elektrolyten verwendet.

Weiter ist aus der Druckschrift AU 55 56 286 A eine Durchflussbatterie mit Vanadium als Elektrolyten bekannt, die zur Speicherung von elektrischer Energie in chemischer Form dient. Außerdem ist dort ein Verfahren zum Be-und Entladen der Batterie angegeben.

Aus der US 4,528,250 A1 ist eine Batterie aus Brennstoffzellen mit gasförmigen Reaktanten bekannt. Die Verbindungsleitungen zwischen den Einzelelementen weisen dielektrische Kunststoffrohrleitungen mit sehr kleinem Durchmesser auf, die so lang sind, dass innerhalb der Flüssigkeits- und Gassäulen der elektrische Widerstand so hoch ist, dass das Entstehen von sogenannten Shuntströmen verhindert wird, der sonst die Arbeit der Gesamtbatterie stören könnte.

Die AT 502979 A4 beschreibt eine Konzeption mit elektrochemischen Strömungsmodulen, in der Nebenschlussströme ebenfalls unterdrückt werden sollen, in der im Elektrolytflüssigkeitskreislauf eine Phase einer elektrisch nicht leitenden Flüssigkeit angeordnet wird. Dadurch soll der Gesamtwirkungsgrad verbessert werden.

Weiter ist aus der DE 697 11 493 T2 eine Redox-Durchflussbatterie bekannt, bei der eine modular aufgebaute Reaktionszelle gebildet ist, wobei diese über einen Grundrahmen verfügt, der für den Einlass und den Auslass des Elektrolyten ausgebildet ist und gleichzeitig als Verteiler dient. Hierbei sind kleine Zellzuleitungen in den Zellrahmen eingearbeitet, die von einer gemeinsamen Zufuhrleitung abgehen.

Ferner ist aus der DE 33 38 724 A1 eine Redox-Durchflussbatterie in bipolarer Bauweise bekannt, bei der die einzelnen Reaktionszellen in bipolarer Weise in Serie geschaltet sind.

Eine weitere Ausgestaltung einer Redox-Durchflussbatterie ist aus der DE 696 00 381 T2 bekannt, bei der ebenfalls Reaktionszellen aneinander gereiht sind.

Aus der WO 2011/114094 A1 ist ein elektrochemischer Zellstapel bekannt, bei dem eine Reihe von Rahmen vorgesehen sind. Diese Rahmen besitzen unterschiedliche Eigenschaften, unter anderem, um innere Shuntströme zu unterbinden und so die Effektivität der Gesamtkonstruktion aufrechtzuerhalten. Das aufsummierte Potential der Zellen soll auf diese Weise aufrechterhalten bleiben.

Die WO 2006/111704 A1 beschreibt ebenfalls einen elektrochemischen Zellstapel mit Rahmen zu einem ähnlichen Zweck.

Zudem sind im Stand der Technik aus der DE 698 01 341 T2 eine Redox-Durchflussbatterieanlage bzw. ein Batteriesystem sowie ein Verfahren zum Betrieb derartiger Anlagen bekannt, bei denen mehrere elektrisch in Reihe geschaltete Reaktionszellen in einer Redox-Durchflussbatterie zusammengeschaltet sind.

In den bisher im Stand der Technik bekannten Durchflussbatterien geht es meist um neue Konzepte für die Forschung oder für Experimente. Für einen gewerblichen Einsatz in Großserien sind diese Konzepte nicht gedacht. So weisen sie einige Nachteile auf, die für Einzelstücke oder bei Forschungszwecken keine Rolle spielen, im gewerblichen Einsatz aber nachteilig werden können. Dies betrifft beispielsweise Aspekte wie eine entsprechende Lebensdauer oder die Verwendung von möglichst kostengünstigen Werkstoffen für diverse Bauteile der betroffenen Anordnungen.

Einer der Aspekte, der bisher wenig beachtet worden ist, besteht darin, dass es in einem elektrochemischen Energiespeicher, in dem ein Elektrolyt mehrere Batteriezellen durchläuft, welche elektrisch in Reihe geschaltet sind, in den Elektrolyten zu einem elektrischen Stromfluss kommt.

Hierbei handelt es sich um einen Ladungstransport durch bewegte Ionen (derartige Ströme durch bewegte Ionen in einem Elektrolyten werden auch als Shunt-Ströme bezeichnet). Die größten Probleme durch diese ungewollten Ströme hierbei sind zum einen die Ladungsverluste durch diese Ströme und zum anderen die unerwünschten und zu vermeidenden Materialbelastungen einzelner Bauteile, insbesondere der Elektroden. Ferner können elektrochemische Vorgänge ausgelöst werden, deren Ursache die Potenzialausbildung entlang des Strompfades ist oder aber aufgrund des elektrischen Stromes selbst hervorgerufen werden.

Weiter problematisch an den bisher im Stand der Technik bekannten Möglichkeiten eine Durchflussbatterie hocheffizient zu betreiben, ist die Schwierigkeit, dass elektrochemische Reaktionen stattfinden, die ungewollt sind.

In einer durch elektrische Serienschaltung mehrerer Reaktionszellen zusammengefügten Redox-Flow-Batterie, können Ströme während der Zuführung der Elektrolyten entlang des Elektrolytzuführungsweges in die Zellen fließen. Insbesondere werden diese Stromflüsse durch elektrische Verbindungen ermöglicht, die entlang der Halbzellen, durch die Membrane sowie durch die Bipolarplatten entstehen. Auf der anderen Seite ist das Elektrolyt als elektronisch leitfähige Verbindung zwischen Zellen unterschiedlichen Potenzials vorhanden, wobei der gemeinsame Kontakt zu den Elektrolyten den Stromfluss ermöglicht.

Insbesondere die durch die Ströme hervorgerufenen elektrochemischen Reaktionen können zur erhöhten Kohlenstoffoxidation bzw. zu erhöhtem Materialverschleiß an den Kollektoren führen, die sich zum Einen auf die Standzeit und zum Anderen auf deren Leistung negativ auswirken.

Neben den zuvor geschilderten Problemen stellt die Versorgung einzelner Zellen einer Batterie mit den Elektrolyten eine besondere Herausforderung dar, da bei einer elektrischen Serienschaltung die einzelnen Reaktionszellen in gleichem Maße mit Elektrolyt versorgt werden müssen. Insbesondere wird die Versorgung unter Last über die Zellspannung bestimmt. Werden diese Zellen hydraulisch parallel geschaltet, hängt deren jeweiliger Volumenstrom empfindlich von dem hydraulischen Widerstand einer jeden Reaktionszelle bzw. Halbzelle ab. Damit kommt es in der hydraulischen Parallelschaltung, gespeist aus einem Druckniveau, leicht zu unkontrollierbaren oder ausbleibenden Elektrolytströmungen innerhalb einzelner Halbzellen und damit zu einer Funktionsbeeinträchtigung oder gar einer Beschädigung der Batterie.

Der vorliegenden Erfindung liegt die Aufgabe zugrunde, eine Durchflussbatterie und/oder einen elektrochemischen Energiewandler sowie einen Zellrahmen und einen Kollektor anzugeben, die einfach und kostengünstig in der Herstellung sind und zudem die zuvor aufgeworfenen Probleme lösen, wobei die einfache Herstellung sowie insbesondere die hohe Effizienz des elektrochemischen Energiewandlers über einen langen Zeitraum im Vordergrund steht.

Gelöst werden diese Aufgaben mit einer Durchflussbatterie nach Anspruch 1 bzw. einem elektrochemischen Energiewandler nach Anspruch 4, 5 und Anspruch 6. Weiter werden diese Aufgaben durch einen Zellrahmen nach Anspruch 8 sowie einer Bipolarplatte und/oder Kollektorplatte nach Anspruch 13 gelöst.

Die Durchflussbatterie oder der elektrochemische Energiewandler für eine Durchflussbatterie, insbesondere eine Redox-Flow-Batterie, umfasst eine Zirkulationsanordnung für einen Elektrolyten, Elektrolytleitungen zur Zu- und Abführung eines oder mehrerer Elektrolyten von einem Vorratstank zu dem elektrochemischen Energiewandler und weiter zur in den jeweiligen Vorratstank in Form eines Kreislaufprozesses, mindestens eine Reaktionszelle mit zwei Kollektoren, nämlich einer Bipolarplatte und/oder einer Kollektorplatte sowie einer Ionen leitenden Membran, wobei bevorzugt eine Vielzahl von elektrisch zusammengeschalteten Reaktionszellen zu einer elektrochemischen Energiewandlereinheit zusammengefügt sind, wobei die einzelnen zusammengeschalteten Reaktionszellen aus zwei Halbzellen bestehen, die durch die Membran getrennt sind, und die einzelnen Reaktionszellen miteinander über die Bipolarplatten verbunden sind, und die Reaktionszellen bevorzugt mit den Elektrolyten in einer Parallelschaltung, besonders bevorzugt über eine gemeinsame Zufuhrleitung versorgt werden.

Dadurch, dass der Einlassbereich zur Einleitung des Elektrolyten in die Reaktionszelle und/oder der Auslassbereich zur Ausleitung des Elektrolyten aus der Reaktionszelle elektrisch isoliert ausgebildet sind, werden wirksam die o.g. unerwünschten Effekte verhindert und eine effektive Verteilung und Führung des Elektrolyten ermöglicht. Die eingangs erwähnten elektrischen Ströme durch Bewegung der Ionen im Elektrolyten können so bei geringen Baugrößen verhindert werden. Insbesondere erfolgt auf diese Weise eine elektrische Isolierung zwischen dem Kollektormaterial der Kollektorplatte bzw. Bipolarplatte und dem Inneren des Kanals, nämlich der Zellzuleitung.

Alle aus dem Stand der Technik bekannten Konzepte beschäftigen sich mit der konkreten Funktionsweise der jeweils betroffenen elektrochemischen Reaktionszellen beziehungsweise der daraus aufgebauten Batterien. Mit der vorliegenden Erfindung geht es jedoch nicht darum, bestimmte Kurzschlussströme oder Shuntströme zu vermeiden oder auch nur zu reduzieren. Es geht darum, den zerstörerischen Effekt der elekrischen Ströme zu vermeiden. Hierzu wird die Stromdichte reduziert und/oder die Ströme werden umgelenkt und auf einem anderen Wege geführt. Eine Reduzierung der Stromdichte kann dadurch erfolgen, dass bestimmte Spitzen vermieden werden, die herkömmlich auftreten. Genau dieser Effekt wird dadurch reduziert, dass der Einlassbereicht und/oder der Auslassbereich elektrisch isoliert ausgebildet werden und dadurch die an sich dort fließenden Ströme nun umgelenkt und in ihrer Stromdichte reduziert werden.

Dadurch können kostengünstigere Werkstoffe verwendet werden beziehungsweise die Lebensdauer der verwendeten Werkstoffe erhöht sich mit dem Vorteil, dass sich auch die Gesamtlebensdauer der Batterie erhöht.

Insbesondere wird eine Zerstörung des Kollektormaterials durch die elektrischen Ströme auf diese Weise vermieden.

Verschiedene Möglichkeiten gibt es, um diese Effekte im Einlassbereich und/oder im Auslassbereich der Reaktionszellen vorzusehen. So kann etwa die elektrische Isolierung auf der Innenseite einer Bohrung angeordnet werden, die für die Zellzuleitungen und/oder Zellableitungen ausgebildet ist.

Ein weiterer besonderer Vorteil ist es, dass die elektrische Isolierung auf der Innenseite und/oder auf der Außenseite der Elektrolytleitung, insbesondere der Zellzuleitung und/oder der Zellableitung angeordnet ist. Auf diese Weise kann nämlich direkt die Entstehung von Spitzen der elektrischen Felder vermieden werden und die Stromdichte (nicht der Strom selbst insgesamt) wird deutlich reduziert.

In einer bevorzugten Ausgestaltung sind der Kopfbereich der Zellzuleitung und/oder der Zellableitung isoliert ausgebildet. Hierdurch kann effektiv ein Kontakt der Kollektorplatten mit den Zellzuleitungen und/oder Zellableitungen verhindert werden.

Die Zellzuleitung und/oder Zellableitungen sind in einem Zellgehäuse, insbesondere dem Zellrahmen als Bohrungen ausgebildet, wobei die elektrische Isolierung auf der Innenseite der Bohrung angeordnet ist.

Wenn die Bipolarplatte und/oder Kollektorplatte im Bereich des Einlassbereiches und/oder des Auslassbereiches elektrisch isoliert ausgebildet ist, wird der Strom auf eine größere Fläche verteilt, wodurch die Stromdichte gesenkt wird und den eingangs erwähnten Effekten effizient entgegengewirkt wird. Der elektrische Erstkontakt des Elektrolyten innerhalb der Reaktionszelle wird auf diese Art in einen geeigneten Bereich gelenkt. Die Stromdichte, jenseits der Isolierung, wird so unterhalb eines kritischen Wertes gehalten bzw. unter diesen kritischen Wert gesenkt. Die Isolierung kann im einfachsten Fall eine Folie sein. Alternativ hierzu kann eine direkt auf den Kollektor, nämlich die Bipolarplatte oder Kollektorplatte, aufgebrachte Isolation verwendet werden.

Wenn im Einlassbereich und/oder im Auslassbereich, insbesondere in den Zellzuleitungen und/oder der Zellableitungen Stromableiter zur Ableitung von Strömen innerhalb der Elektrolyten vorgesehen sind, wobei die Stromableiter gegenüber der Wirkung des Stroms innert ist, wird gewährleistet, dass der Erstkontakt der Ströme über den Elektrolytweg innerhalb der Zelle oder besonders bevorzugt bereits innerhalb des Elektrolytkanals vor der Zelle abgefangen wird.

Die zuvor vorgestellten Ausführungen sind kostengünstig herstellbar und zudem sehr leicht anpassbar.

Dadurch, dass im Einlassbereich und/oder im Auslassbereich, insbesondere in den Zellzuleitungen und/oder der Zellableitungen eine Leitungsdrosselung vorgesehen ist, wird ein Druckabfall erzeugt, der eine leistungsgerechte Anströmung des Elektrolyten gewährleistet. Der Druckabfall ist hierbei relativ zu dem Druck des Elektrolyten innerhalb des Versorgungskanals aller Zellen, nämlich der Zufuhrleitung, in Bezug auf den Druck in der hinter der Leitungsdrosselung liegenden Zelle zu sehen. Damit steht bei reduzierter Strömung durch die Zelle ein in der Leitungsdrossel abnehmender Widerstand zur Verfügung. Hierdurch erhöht sich der hydraulische Druck am Einlass der Zelle und gleicht so geringe strömungstechnische Unterschiede der Halbzellen aus, wodurch ein Ausbleiben der Elektrolytströmung verhindert wird. Mit dieser Ausgestaltung lässt sich eine große Anzahl von einzelnen Reaktionszellen aus einem gemeinsamen Druckniveau mit einer konstanten, untereinander nur gering abweichenden hydraulischen Strömung, versorgen. Insbesondere ist die Leitungsdrosselung als einstellbare Leitungsdrosselung ausgebildet, so dass während des laufenden Betriebes eine individuelle Leitungsdrosselung erfolgen kann.

Erfindungsgemäß weist der Zellrahmen als Bohrungen ausgebildete Zellzuleitungen, Zellableitungen, Zufuhrleitungen und/oder Abfuhrleitungen auf. Hierdurch ist die Herstellung eines sehr kompakten und integrierten Zellrahmens möglich, wobei dieser zudem sehr einfach, beispielsweise aus einem Kunststoff, insbesondere PVC, hergestellt werden kann.

Weiter weist der Zellrahmen für einen elektrochemischen Energiewandler einer Durchflussbatterie als Bohrungen ausgebildete Zellzuleitungen und/oder Zellableitungen auf, wobei die Zellzuleitungen und/oder Zellableitungen isoliert ausgebildet sind.

In einer besonderen Ausgestaltung weist der Zellrahmen weiter eine Leitungsdrosselung auf. Die Leitungsdrossel ist jeweils durch eine dünne Bohrung in dem Zellrahmen realisiert. Wenn der Zellrahmen wie bevorzugt aus Kunststoff besteht, beispielsweise aus Polyvinylchlorid (PVC) ist eine zusätzliche Isolierung dieser Leitungsdrosselung nicht erforderlich.

Eine Isolierung findet auch bei dieser Ausführungsform in dem davor liegenden Verteilerkanal statt. Dort soll ein Stromfluss aufgrund des Kontaktes des Elektrolyten mit dem Kollektor vermieden werden.

Eine technisch recht anspruchsvolle Ausführungsform sieht als Weiterbildung eine einstellbare Leitungsdrosselung vor.

Zudem ist die Bipolarplatte und/oder Kollektorplatte für einen elektrochemischen Energiewandler einer Durchflussbatterie, mindestens in einem Teilbereich, bevorzugt in mehreren Teilbereichen isoliert ausgebildet, wobei dieser Teil, die Kollektorisolierung im bestimmungsgemäßen Gebrauch im Bereich der Einlassbereiche und/oder der Auslassbereiche angeordnet ist.

Ferner weist der Zellrahmen eine Leitungsdrosselung, bevorzugt als Bohrungen ausgebildete Zellzuleitungen und/oder Zellableitungen mit unterschiedlichen Bohrlochdurchmessern in Abhängigkeit von dem hydrostatischen Widerstand bedingt durch die Länge der Bohrung auf. Hierzu werden von einem Hauptzuleitungskanal mehrere elektrolytführende Leitungen mit unterschiedlich großen Durchmessern in den Zellrahmen gefertigt. Je nach Länge der Leitungen oder nach Abzweigpunkt von einer gemeinsamen Verteilung werden die Kanäle entsprechend unterschiedlich ausgestaltet, so dass immer die gleiche Menge an Elektrolyt pro Kanal in den entsprechenden Reaktionsraum eingeleitet wird. Hierdurch wird ein gleichmäßiger Fluss durch den ElektrolytReaktionsraum realisiert, der zu einer Effizienzsteigerung insgesamt führt.

Wenn der Zellrahmen Bohrungen als Zufuhrleitung jeweils für den positiven und/oder den negativen Elektrolyten und/oder Abfuhrleitung jeweils für den positiven und/oder den negativen Elektrolyten aufweist, wobei die jeweilig korrespondierenden Zu- und Abfuhrleitungen bevorzugt diagonal gegenüberliegend angeordnet sind, erfolgt eine weitere Optimierung des Flusses durch den Elektrolytreaktionsraum.

Als weitere sehr wichtige Neuerung weist der Zellrahmen eine Gummidichtung, insbesondere einen O-Ring, als Dichtung zu einem weiteren Zellrahmen auf, wobei die Dichtung, insbesondere der oder die O-Ringe, eine Potentialsperre zwischen einer auf dem Zellrahmen aufgebrachten Bipolarplatte und dem Elektrolyten bilden und/oder bevorzugt zusammen mit der Bipolarplatte die Zellrahmen hydraulisch abdichten. Durch den möglichen Kontakt des Elektrolyten mit der Bipolarplatte entsteht ein Ausgleichsstrom zwischen den unterschiedlichen Potentialen, der effektiv durch die eingebrachte Dichtung verhindert wird.

Die zuvor angeführten Lösungen und Ausgestaltungen können insbesondere in Kombination miteinander die Effizienz weiter erhöhen.

Weitere vorteilhafte Ausgestaltungen können den Figuren entnommen werden. Nachfolgend werden Ausführungsbeispiele der Erfindung anhand der beiliegenden Zeichnungen detailliert beschrieben.

Darin zeigen:
- **Figur 1**: eine schematische Darstellung einer Redox-Durchflussbatterie in einer Prinzipdarstellung;
- **Figur 2**: eine schematische Darstellung eines elektrochemischen Energiewandlers mit einzelnen Reaktionszellen, die elektrisch in Reihe geschaltet sind;
- **Figur 3a**: eine schematische Darstellung eines ersten Ausführungsbeispiels eines Einlassbereiches einer Reaktionszelle eines elektrochemischen Energiewandlers mit einer Leitungsisolierung;
- **Figur 3b**: eine schematische Darstellung eines zweiten Ausführungsbeispiels eines Einlassbereiches einer Reaktionszelle eines elektrochemischen Energiewandlers mit einer Leitungsisolierung;
- **Figur 3c**: eine schematische Darstellung eines dritten Ausführungsbeispiels eines Einlassbereiches einer Reaktionszelle eines elektrochemischen Energiewandlers mit einer Leitungsisolierung;
- **Figur 4a**: eine schematische Darstellung eines vierten Ausführungsbeispiels eines Einlassbereiches einer Reaktionszelle eines elektrochemischen Energiewandlers mit einer Kollektorisolierung;
- **Figur 4b**: eine schematische Schnittdarstellung des vierten Ausführungsbeispiels eines Einlassbereiches einer Reaktionszelle eines elektrochemischen Energiewandlers mit einer Kollektorisolierung;
- **Figur 5**: eine schematische Darstellung eines fünften Ausführungsbeispiels eines Einlassbereiches einer Reaktionszelle eines elektrochemischen Energiewandlers mit zwei unterschiedlichen Leitungsdrosselungen;
- **Figur 6**: eine schematische Darstellung eines elektrochemischen Energiewandlers mit einzelnen Reaktionszellen, die elektrisch in Reihe geschaltet sind, wobei Leitungsdrosselungen in den Zellzuleitungen vorgesehen sind.
- **Figur 7a**: eine schematische Darstellung eines ersten Ausführungsbeispiels eines ersten Zellrahmens mit eingearbeiteten Elektrolytkanälen;
- **Figur 7b**: eine schematische Darstellung eines ersten Ausführungsbeispiels eines zweiten Zellrahmens mit eingearbeiteten Elektrolytkanälen;
- **Figur 8a**: eine schematische Darstellung eines zweiten Ausführungsbeispiels eines ersten Zellrahmens mit eingearbeiteten Elektrolytkanälen;
- **Figur 8b**: eine schematische Darstellung eines zweiten Ausführungsbeispiels eines zweiten Zellrahmens mit eingearbeiteten Elektrolytkanälen und
- **Figur 9**: eine schematische Darstellung eines aus Zellrahmen gemäß der Figur 8a und der Figur 8b zusammengesetzten elektrochemischen Energiewandlers.

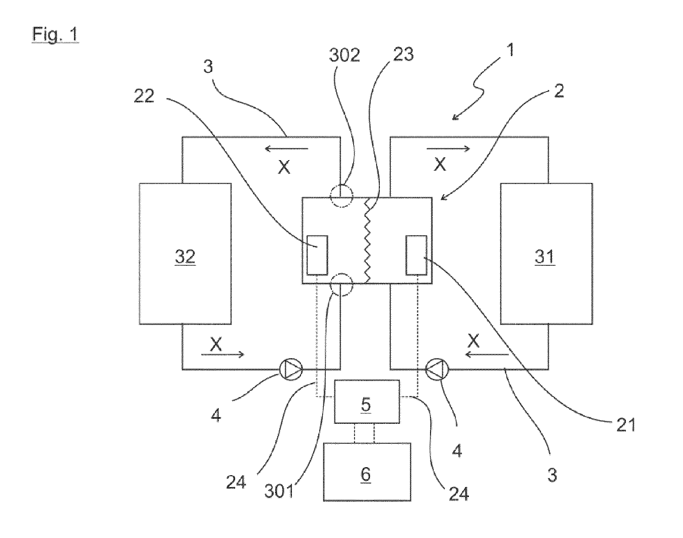

In **Figur 1** ist eine schematische Darstellung einer Redox-Durchflussbatterie 1 dargestellt. Hierbei handelt es sich um die Darstellung des generellen Aufbaus der Redox-Durchflussbatterie 1.

Die Redox-Durchflussbatterie 1 besteht aus einem elektrochemischen Energiewandler 2, der über Elektrolytleitungen 3 mit Vorratstanks, nämlich einem Vorratstank 31 für den positiven Elektrolyt 33 und einem Vorratstank 32 für den negativen Elektrolyt 33, verbunden ist. Hierbei bilden sich zwei Kreisläufe aus, nämlich ein erster Kreislauf, der des positiven Elektrolyts 33 und ein zweiter Kreislauf, der des negativen Elektrolyts 33. Die Elektrolyten 33 werden mit Hilfe von Pumpen 4 in ihren jeweiligen Kreisläufen durch den elektrochemischen Energiewandler 2 geführt, wo der jeweilige Elektrolyt 33 auf- bzw. entladen werden kann (Reduktion bzw. Oxidation).

Der elektrochemische Energiewandler 2 besteht aus zwei Kammern, den Halbzellen, die durch eine ionenleitende Membran 23 voneinander getrennt sind. Durch diese beiden Kammern fließt jeweils einer der Elektrolyten 33. In diesem Ausführungsbeispiel ist in der linken Kammer ein negativer Kollektor 22 angeordnet und es fließt dort der negative Elektrolyt 33 durch. In der rechten Kammer ist ein positiver Kollektor 21 angeordnet und es fließt dort der positive Elektrolyt 33 durch. Die Kollektor 21, 22 sind über elektrische Leitungen 24 mit einem Laderegler, einem Inverter und/oder einer Batteriesteuerung 5 verbunden. Die Batteriesteuerung bzw. der Laderegler und/oder Inverter 5 steuert dabei die Spannung zwischen den Kollektor 21, 22 und damit auch die Auf- und Entladung der Durchflussbatterie 1.

Die zwei Halbzellen des elektrochemischen Energiewandlers 2 weisen jeweils einen Einlassbereich 301 und einen Auslassbereich 302 auf. In dem Einlassbereich 301 bzw. in dem Auslassbereich 302 münden die Zuleitungen bzw. führen die Ableitungen fort.

Die Energie kommt von einer Stromquelle 6 bzw. wird abgeführt zu einem Verbraucher 6, die bzw. der mit dem Laderegler, Inverter und/oder der Batteriesteuerung 5 verbunden sind.

Die Flussrichtung X zeigt die Richtung des Elektrolytentransportes an.

Im Weiteren werden für gleiche Elemente die gleichen Bezugszeichen verwendet.

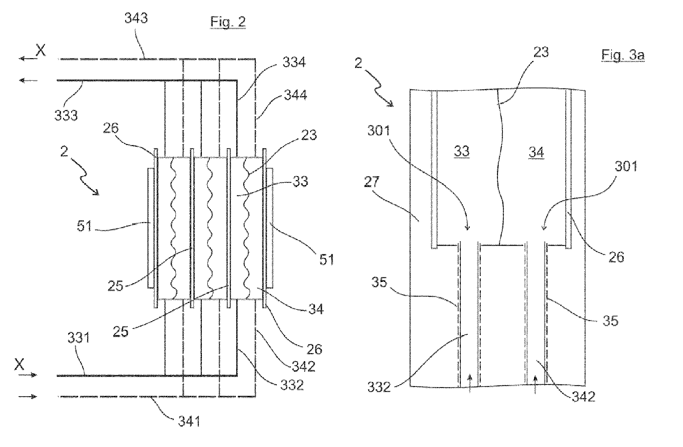

In **Figur 2** ist eine schematische Darstellung eines elektrochemischen Energiewandlers 2 mit einzelnen Reaktionszellen, die elektrisch in Reihe geschaltet sind, dargestellt.

Die einzelnen Reaktionszellen bestehen jeweils aus zwei Halbzellen, wobei in einer Halbzelle der positive Elektrolyt 33 und in der anderen Halbzelle der negative Elektrolyt 34 die jeweilige Halbzelle durchströmt. Hierzu weisen die Halbzellen, die den positiven Elektrolyten 33 führen, Zellzuleitungen für den positiven Elektrolyt 332 sowie Zellableitungen für den positiven Elektrolyt 334 auf. Die Halbzellen, die den negativen Elektrolyten 34 führen, weisen Zellzuleitungen für den negativen Elektrolyten 342 und Zellableitungen für den negativen Elektrolyten 344 auf.

Die jeweiligen Zellableitungen 334 und 344, getrennt nach dem negativen und dem positiven Elektrolyten, münden jeweils in eine gemeinsame Abfuhrleitung 333 bzw. 343. Analog verhält es sich mit den Zellzuleitungen 332 und 342, die jeweils aus einer gemeinsamen Zufuhrleitung 331 bzw. 341 gespeist werden.

Zwischen den Halbzellen zweier benachbarter Reaktionszellen befindet sich eine bipolare Trennwand 25, nämlich eine Bipolarplatte 27. An den jeweiligen Endseiten des elektrochemischen Energiewandlers 2 befinden sich monopolare Trennwände 26, nämlich Kollektorplatten, die den elektrochemischen Energiewandler 2 begrenzen. An den jeweiligen Enden sind die Batteriepole 51 vorgesehen, die jeweils mit der Stromquelle bzw. dem Verbraucher 6 verbunden sind.

**Figur 3a** zeigt eine schematische Darstellung eines ersten Ausführungsbeispiels eines Einlassbereiches 301 einer Reaktionszelle eines elektrochemischen Energiewandlers 2 mit einer Leitungsisolierung 35.

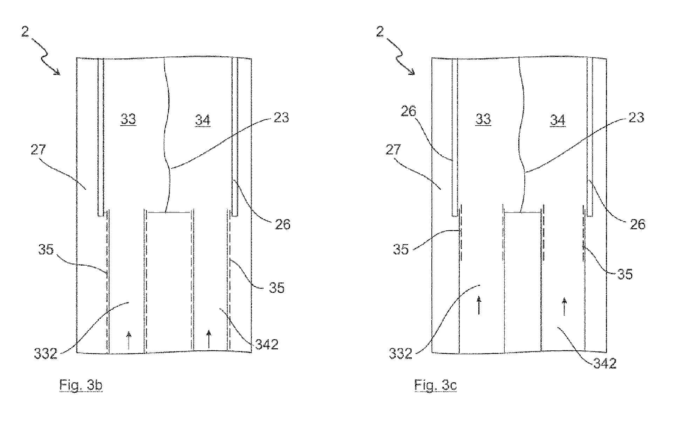

In dieser Darstellung ist zur Vereinfachung eine einfache Reaktionszelle eines elektrochemischen Energiewandlers 2 dargestellt. Diese Reaktionszelle befindet sich in einem Zellrahmen 27. Bei dieser Ausführungsform in den Figuren 3a, 3b und 3c wird für den Zellrahmen 27 ein Werkstoff eingesetzt, der elektrisch leitfähig ist. Es kann sich beispielsweise um einen modifizierten Kunststoff oder einen Kohlenfaserverbundwerkstoff handeln.

In den Zellrahmen 27 sind Bohrungen eingebracht, in denen die Zellzuleitung 332 und 342 eingebracht sind. Die Zellzuleitungen 332 und 342 können hierbei zusätzlich vorgesehene Leitungen sein, die innerhalb der Bohrungen geführt sind. Selbstverständlich können die Zellzuleitungen 332 und 342 auch durch die Bohrungen selber realisiert werden.

Die Besonderheit ist hierbei die Leitungsisolierung 35, die entweder an den Innenwänden der Bohrung in dem Zellrahmen 27 vorgesehen ist oder aber um die in der Bohrung des Zellrahmen 27 geführtem Zellzuleitung 332 bzw. 342 geführt ist. Hierdurch wird gewährleistet, dass ein elektrischer Stromfluss, bedingt durch Elektronenbewegung, effektiv verhindert wird und insbesondere keine elektrische Verbindung zu den Kollektorplatten möglich ist. Hierzu sind die Kopfbereiche der Zuleitungen 332 und 342 ebenfalls elektrisch isoliert.

Sämtliche hier und in den weiteren Figuren ausgeführten Erläuterungen in Bezug auf die Zellzuleitungen 332 und 342 sind analog auf die Zellableitungen 334 und 344 anzuwenden.

Bei entsprechender Flussrichtungsumkehr -X des Elektrolyts werden der Einlassbereich 301 zum Auslassbereich und der Auslassbereich 302 zum Einlassbereich. Daher sind in einer besonders bevorzugten Ausgestaltung beide Bereiche elektrisch isoliert bzw. entsprechend ausgebildet.

In der **Figur 3b** ist eine schematische Darstellung eines zweiten Ausführungsbeispiels eines Einlassbereiches 301 einer Reaktionszelle eines elektrochemischen Energiewandlers 2 mit einer Leitungsisolierung 35 dargestellt.

Hierbei handelt es sich um ein abgewandeltes Ausführungsbeispiel des Einlassbereiches 301 aus Fig. 3a, wobei hier die Zellzuleitungen 332 und 342 deutlich breiter gewählt wurden, um darzustellen, wie die Zellzuleitung 332 bzw. 342 von den Kollektorplatten 26 isoliert sind.

Die **Figur 3c** zeigt eine schematische Darstellung eines dritten Ausführungsbeispiels eines Einlassbereiches 301 einer Reaktionszelle eines elektrochemischen Energiewandlers 2 mit einer Leitungsisolierung 35.

In dieser Darstellung sind die zuvor diskutierten Ausführungsbeispiele erneut aufgegriffen worden, wobei hier eine auf der Innenseite der in den Zellrahmen 27 eingebrachten Bohrungen vorgesehene Leitungsisolierung 35 das Hauptaugenmerk darstellt. Exemplarisch ist die Leitungsisolierung 35 im oberen Bereich ausgeführt, wobei diese auch die gesamten Zellzuleitungen 332 und 342 sowie zusätzlich die weiteren Zufuhrleitungen 331 und 342, respektive die Ableitungen entsprechend, von innen auskleiden können. Durch die vollständige elektrische Isolierung der Zu- und/oder Ableitungen mittels der Leitungsisolierung 35 ist ein elektrischer Stromfluss bedingt durch die Elektronenbewegung vollständig ausgeschlossen.

Insbesondere scheint jedoch die oben erwähnte kopfseitige Isolierung des Einlassbereiches 301 bzw. der Zellzuleitungen 332 und 342 bereits ausreichend zu sein.

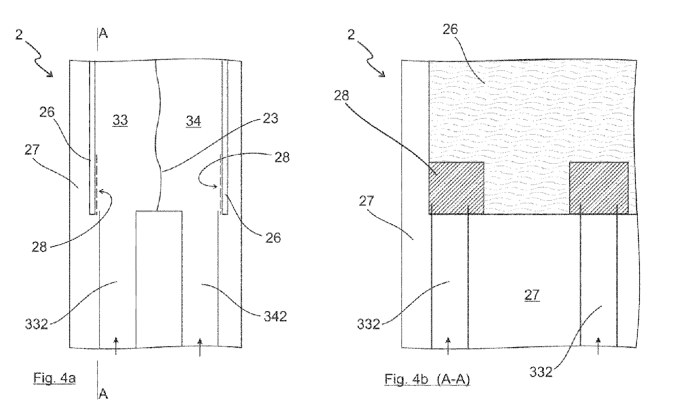

In **Figur 4a** ist eine schematische Darstellung eines vierten Ausführungsbeispiels eines Einlassbereiches 301 einer Reaktionszelle eines elektrochemischen Energiewandlers 2 mit einer Kollektorisolierung 28 dargestellt.

Hierbei ist erneut ein Einlassbereich 301 einer Reaktionszelle dargestellt, wobei in diesem Ausführungsbeispiel die elektrische Isolierung als Kollektorisolierung 28 auf den Kollektorplatten 26 vorgesehen ist. Die Kollektorisolierung 28 ist hierbei nur in einem geringen Teilbereich der Kollektorplatten 26 vorgesehen, wobei diese Bereiche im Einströmbereich bzw. Abflussbereich der Zu- bzw. Ableitungen liegen.

Für weitere Details wird auf die Fig. 4b verwiesen.

Die **Figur 4b** zeigt eine schematische Schnittdarstellung durch A-A des vierten Ausführungsbeispiels eines Einlassbereiches 301 einer Reaktionszelle eines elektrochemischen Energiewandlers 2 mit einer Kollektorisolierung 28.

In dieser Darstellung wird das Ausführungsbeispiel aus Fig. 4a aufgegriffen. Hierbei sind die Größenverhältnisse zu erkennen. Insbesondere ist für jeden einzelnen Einlassbereich einer jeden Zellzuleitung 332 eine entsprechende Kollektorisolierung 28 zugeordnet.

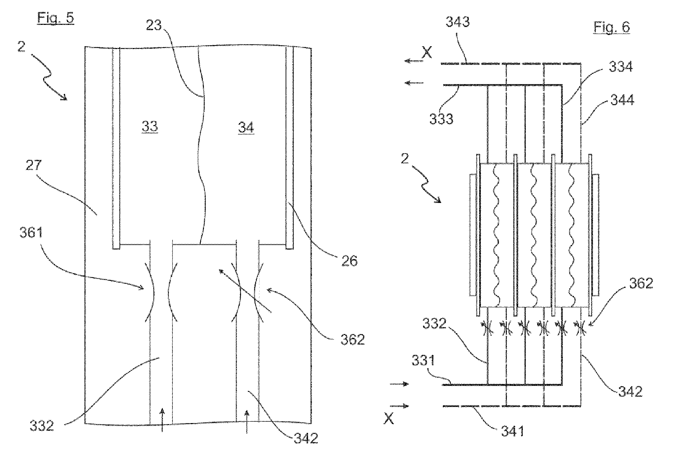

In Figur 5 ist eine schematische Darstellung eines fünften Ausführungsbeispiels eines Einlassbereiches 301 einer Reaktionszelle eines elektrochemischen Energiewandlers 2 mit zwei unterschiedlichen Leitungsdrosselungen 361 dargestellt.

Hierbei ist ein Ausführungsbeispiel der Leitungsdrossel als permanent voreingestellte Leitungsdrosselung 361 ausgebildet. Eine weitere Leitungsdrossel ist als verstellbare bzw. einstellbare Leitungsdrosselung 362 ausgebildet. Beide Varianten können jeweils einzeln oder paarweise zur Anwendung kommen, also pro Reaktionszelle zwei gleichartig ausgebildete Leitungsdrosseln.

Bereits mit einer kombinierten Leitungsdrossel aus einer fest eingestellten Leitungsdrosselung 361 und einer variabel einstellbaren Leitungsdrosselung 362 kann dauerhaft auf unterschiedliche Halbzellenverhältnisse reagiert werden, so dass die Effektivität ein sehr hohes Niveau aufweist.

In einer besonders bevorzugten Ausgestaltung können aber auch beide Leitungsdrosseln als einstellbare Leitungsdrosselungen 362 ausgebildet werden.

Die **Figur 6** zeigt eine schematische Darstellung eines elektrochemischen Energiewandlers 2 mit einzelnen Reaktionszellen, die elektrisch in Reihe geschaltet sind, wobei Leitungsdrosselungen 361 in den Zellzuleitungen vorgesehen sind.

In dieser Darstellung ist der elektrochemische Energiewandler 2 aus Fig. 2 erneut aufgegriffen, wobei nunmehr ausschließlich im Zellzuleitungsbereich 332 bzw. 342 einstellbare Leitungsdrosselungen 362 vorgesehen sind. Hierdurch kann jede Halbzelle separat und einzeln mit einem genau vorbestimmten Druckniveau versorgt werden. Durch die Ausgestaltung erfolgt eine hoch effiziente Steuerung der Batterie. Die Überwachung und Steuerung sowie die Regelung kann über entsprechende Strömungs- oder Drucksensoren erfolgen.

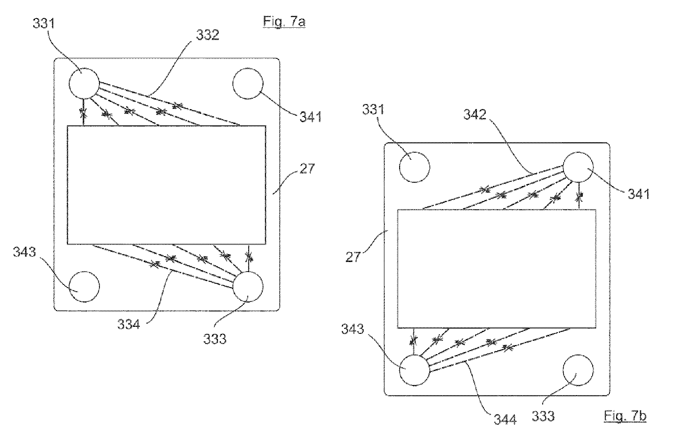

In **Figur 7a** ist eine schematische Darstellung eines ersten Ausführungsbeispiels eines ersten Zellrahmens 27 mit eingearbeiteten Elektrolytkanälen 331,333, 341, 342, 343 und 344 dargestellt.

Ein derartiger Zellrahmen 27 kann beispielsweise aus PVC hergestellt werden.

In diesen Zellrahmen 27 kann im Inneren eine Aussparung eingearbeitet werden, die später den Reaktionsraum einer der zwei Halbzellen 271, 272 einer Reaktionszelle eines elektrochemischen Energiewandlers 2 darstellt und in dem einer der Elektrolyten 33, 34 geführt ist.

In den Zellrahmen 27 sind Bohrungen oder Kanäle eingearbeitet, die die Zellzuleitungen 332 bzw. die Zellableitungen 334 ausbilden. Diese dienen der Zu- und Abfuhr des Elektrolyten 33 resp. 34 in den Reaktionsraum der Halbzelle.

Weiter sind ergänzend entsprechende Steuerventile vorgesehen, die den Durchfluss steuern können, so dass die gleichmäßige Verteilung bzw. Einbringung in den Reaktionsraum des Zellrahmens 27 gewährleistet ist.

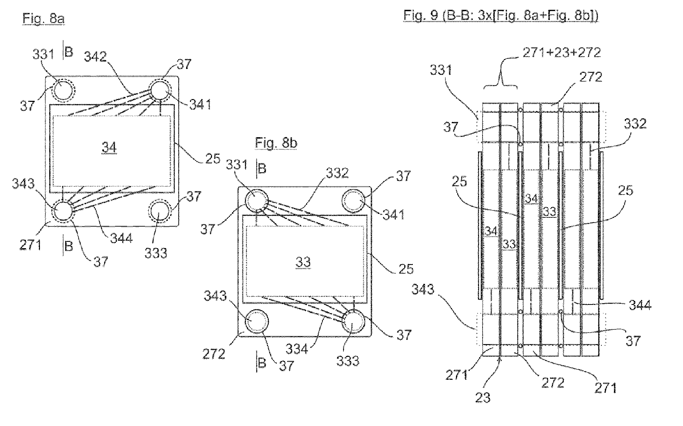

Die Zufuhrleitungen 331, 341 und die Abfuhrleitungen 333, 343 haben die gleiche Dimensionierung. Bei entsprechender Aneinanderreihung der einzelnen Zellrahmen (vgl. Figur 9) bildet sich ein erfindungsgemäßer Stapel oder auch Stack aus. Hierbei bilden sich durch die Zellrahmen 27 durchlaufende Ab- bzw. Zufuhrleitungen für die Elektrolyten 33, 34 durch alle einzelnen Zellrahmen 27 aus, die der Zu- bzw. Abführung der Elektrolyten 33, 34 dienen und die Zellzu-332, 342 sowie Zellableitungen 334, 344 entsprechend versorgen.

Alternativ dazu können die Bohrungen bzw. Kanäle während der Herstellung des Zellrahmens 27 mit unterschiedlichen Durchmessern bzw. Querschnitten gefertigt werden, so dass beispielsweise eine kurze Bohrung einen geringeren Querschnitt als eine lange Bohrung aufweist. Bedingt durch die Strömungswiderstände erfolgt hierdurch eine effizientere Verteilung des Elektrolyten 33, 34 in den Reaktionsraum hinein.

**Figur 7b** zeigt eine schematische Darstellung eines ersten Ausführungsbeispiels eines zweiten Zellrahmens 27 mit eingearbeiteten Elektrolytkanälen. Hierbei handelt es sich im Wesentlichen um den gleich konstruierten Zellrahmen wie der aus der Figur 7a bekannte Zellrahmen 27, wobei der Zellrahmen aus der Figur 7a lediglich nunmehr von der Rückseite gezeigt ist und die einzelnen Merkmale nunmehr andere Funktionen zugewiesen bekommen haben.

Die entsprechenden Elektrolytkanäle 331, 333, 341, 343, die die Elektrolyten 33 bzw. 34 leiten, sind gleich groß ausgebildet, so dass diese einfach durch Drehen des Zellrahmens 27 von der Vorderseite auf die Rückseite vertauscht werden können, um im Anschluss einen anderen Elektrolyten 34 bzw. 33 zu leiten.

Hierdurch lässt sich durch eine Massenproduktion eines einzigen Zellrahmens 27 ein für einen Stapel oder Stack verwendbarer Zellrahmen 27 mit wechselnder Anordnung, nämlich Vorderseite an Vorderseite und Rückseite an Rückseite, realisieren, wobei dieser eine effiziente Elektrolytverteilung ermöglicht, wodurch die Effizienz des elektrochemischen Energiewandlers 2 einer Redox-Durchflussbatterie 1 gesteigert wird.

**Figur 8a** zeigt eine schematische Darstellung eines zweiten Ausführungsbeispiels eines ersten Zellrahmens 271 mit eingearbeiteten Elektrolytkanälen.

Im Wesentlichen handelt es sich dabei um einen ähnlichen Zellrahmen 27 wie in Figur 7a bzw. 7b.

Hierbei sind im Unterschied zu den Zellrahmen 27 aus den Figuren 7a und 7b die Zellzu- und Zellableitungen ohne entsprechende Ventile ausgebildet, sondern über entsprechende Kanaldrosselungen bzw. Querschnitte resp. Dimensionierungen realisiert, um eine gleichmäßige Verteilung des Elektrolyten 33 zu gewährleisten.

Als wesentliche weitere Neuerung ist auf der Oberfläche des Zellrahmens 27 um die Zufuhrleitungen 331, 341 sowie um die Abfuhrleitungen 333, 343 jeweils eine Dichtung in Form eines O-Ringes 37 angeordnet. Hierdurch wird effektiv der Kontakt der Bipolarplatte 25, auch als Planarkollektor bezeichnet, zum Elektrolyten 33, 34 verhindert. Ein Kontakt der Bipolarplatte 25 zum Elektrolyten 33, 34 würde zu einem Ausgleichsstrom zwischen den unterschiedlichen Potentialen führen und somit zu erheblichen Leistungsverlusten der Batterie an sich.

Durch die O-Ringe 37 wird ein derartiger Ausgleichsstrom zwischen den unterschiedlichen Potentialen, bedingt durch den Kontakt des Elektrolyten 33, 34 mit der Bipolarplatte 25 effektiv verhindert. Es bildet sich eine Kanalisolation aus, wodurch sich der Strompfad in die Zelle durch die entsprechenden Zellzu-332, 342 bzw. Zellableitungen 334, 344 hineinverlagert und auf diese Weise die Stromdichte unterhalb kritischer Werte sinkt. Bevorzugt ist im Einlassbereich hierzu eine Einlassbereichsisolation, wie bereits zuvor beschrieben, vorgesehen, die den Strom auf einen größeren Bereich verteilt.

In diesem Ausführungsbeispiel kann auf eine Isolation der Zellzu- 332, 342 bzw. Zellableitungen 334, 344 verzichtet werden, wenn der Zellrahmen aus einem nicht leitenden PVC-Kunststoff gefertigt ist..

In **Figur 8b** ist eine schematische Darstellung eines zweiten Ausführungsbeispiels eines zweiten Zellrahmens 272 mit eingearbeiteten Elektrolytkanälen dargestellt, wobei dies ebenfalls ein gedrehter, nämlich rotiert um die zentrale vertikale Achse, Zellrahmen 27 entsprechend dem Ausführungsbeispiel aus Figur 8a ist.

**Figur 9** zeigt eine schematische Darstellung eines aus Zellrahmen 271 und 272 gemäß der Figur 8a und der Figur 8b zusammengesetzten elektrochemischen Energiewandlers 2.

Hierbei ist der elektrochemische Energiewandler 2 gemäß dem folgenden Schema von links nach rechts zusammengesetzt:

Kollektorplatte 26 - Reaktionszelle umfassend einen Zellrahmen 271 der ersten Halbzelle einen zweiten Zellrahmen 272 der zweiten Halbzelle mit dazwischen liegender ionenleitenden Membran 23, die zusammen die Reaktionszelleneinheit 271+23+272 bilden - Bipolarplatte 25 mit jeweils um die Zufuhrleitungen 331, 341 sowie um die Abfuhrleitungen 333, 343 angeordneten Dichtungen in Form von O-Ringen 37 - gefolgt von der Reaktionszelleneinheit 271+23+272 - Bipolarplatte 25 mit jeweils um die Zufuhrleitungen 331, 341 sowie um die Abfuhrleitungen 333, 343 angeordneten Dichtungen in Form von O-Ringen 37 - erneut gefolgt von der Reaktionszelleneinheit 271+23+272 - weitere Kollektorplatte 26.

Die schematische exemplarische Zusammenstellung der aus den Figuren 8a und 8b bekannten Zellrahmen 271 und 272 ist entlang der Schnittlinien B-B entsprechend den Figuren 8a und 8b gefertigt.

Zwischen den Zellrahmen 271 und 272 müssen bei der Zusammenfügung mit der ionenleitenden Membran 23 keine Dichtungen angesetzt werden, da in diesem Bereich keine Ströme durch die ionenleitende Membran 23 fließen. Gleichwohl wird selbstverständlich ausgeschlossen, dass Elektrolytlösung 33, 34 aus dem Reaktionsraum der Zellrahmen 271, 272 durch diesen Zusammenfügungsbereich in die Zufuhrleitungen 331, 341 sowie die Abfuhrleitungen 333, 343 gelangt.

Die dargestellten Ausführungsbeispiele sind nicht abschließend zu sehen, sondern stellen lediglich mögliche Ausführungsbeispiele der erfindungsgemäßen Durchflussbatterie oder des elektrochemischen Energiewandler für eine Durchflussbatterie dar. Form, Größe, Länge und Dicke sind an die Gegebenheiten anzupassen.

Selbstverständlich sind die genannten Ausgestaltungen und Ausführungen auch für eine "Redox-Durchflussbatterie" anzuwenden, die lediglich mit einem Elektrolyten arbeitet, wobei der Reaktionspartner beispielsweise die Luft ist, die entsprechend als Austauschpartner für Elektronen fungiert, so dass auf den zweiten Elektrolyten verzichtet werden kann.

### Bezugszeichenliste

| | |
|---|---|
| 1 | Redox-Durchflussbatterie |
| 2 | elektrochemischer Energiewandler |
| | |
| 21 | positiver Kollektor |
| 22 | negativer Kollektor |
| 23 | ionenleitende Membran |
| 24 | elektrische Leitung |
| 25 | bipolare Trennwand / Bipolarplatte |
| 26 | monopolare Trennwand / Kollektorplatte |
| 27 | Zellrahmen |
| 271 | Zellrahmen erste Halbzelle |
| 272 | Zellrahmen zweite Halbzelle |
| 28 | Kollektorisolierung |
| | |
| 3 | Elektrolytleitungen |
| 301 | Einlassbereich |
| 302 | Auslassbereich |
| 31 | Vorratstank positiver Elektrolyt |
| 32 | Vorratstank negativer Elektrolyt |
| 33 | positiver Elektrolyt |
| 331 | Zufuhrleitung positiver Elektrolyt |
| 332 | Zellzuleitung positiver Elektrolyt |
| 333 | Abfuhrleitung positiver Elektrolyt |
| 334 | Zellableitung positiver Elektrolyt |
| 34 | negativer Elektrolyt |
| 341 | Zufuhrleitung negativer Elektrolyt |
| 342 | Zellzuleitung negativer Elektrolyt |
| 343 | Abfuhrleitung negativer Elektrolyt |
| 344 | Zellableitung negativer Elektrolyt |
| 35 | Leitungsisolierung |
| 361 | Leitungsdrosselung |
| 362 | einstellbare Leitungsdrosselung |
| 37 | Dichtung / O-Ring |
| 4 | Pumpe |
| | |
| 5 | Laderegler / Inverter / Batteriesteuerung |
| 51 | Batteriepol |
| 6 | Stromquelle / Verbraucher |
| | |
| X | Flussrichtung Elektrolyt |

## Patentansprüche

1. Durchflussbatterie (1) oder elektrochemischer Energiewandler (2) für eine Durchflussbatterie (1), insbesondere eine Redox-Flow-Batterie, mit einer Zirkulationsanordnung für einen Elektrolyten (33), Elektrolytleitungen (3) zur Zu- und Abführung (X) eines oder mehrerer Elektrolyten (33) von einem Vorratstank (31, 32) zu dem elektrochemischen Energiewandler (2) und weiter zurück in den jeweiligen Vorratstank (31, 32) in Form eines Kreislaufprozesses, wobei der elektrochemische Energiewandler (2) mindestens eine Reaktionszelle mit zwei Elektroden, nämlich Bipolarplatte (25) und/oder Kollektorplatte (26), und einer ionenleitenden Membran (23), bevorzugt eine Vielzahl von elektrisch zusammengeschalteten Reaktionszellen umfasst,
wobei diese bevorzugt mit Elektrolyten (33) in Parallelschaltung versorgt werden, und
die jeweils einen Einlassbereich (301) zur Einleitung des Elektrolyten (33) und einen Auslassbereich (302) zur Ausleitung des Elektrolyten (33) aufweist,
**dadurch gekennzeichnet,**
**dass** der Einlassbereich (301) und/oder der Auslassbereich (302) elektrisch isoliert (35) ausgebildet sind.

2. Durchflussbatterie (1) oder Elektrochemischer Energiewandler (2) nach Anspruch 1,
**dadurch gekennzeichnet,**
**dass** die elektrische Isolierung (35) auf der Innenseite und/oder auf der Außenseite der Elektrolytleitung, insbesondere der Zellzuleitung (332, 342) und/oder der Zellableitung (334, 344) angeordnet ist,
wobei bevorzugt der Kopfbereich der Zellzuleitung (332, 342) und/oder der Zellableitung (334, 344) isoliert ausgebildet ist.

3. Elektrochemischer Energiewandler (2) nach Anspruch 1 oder 2,
**dadurch gekennzeichnet,**
**dass** die Zellzuleitung (332, 342) und/oder Zellableitungen (334, 344) in einem Zellgehäuse, insbesondere dem Zellrahmen (27) als Bohrungen ausgebildet sind, wobei die elektrische Isolierung (35) auf der Innenseite der Bohrung angeordnet ist.

4. Elektrochemischer Energiewandler (2) für eine Durchflussbatterie (1), insbesondere eine Redox-Flow-Batterie, mit einer Zirkulationsanordnung für einen Elektrolyten (33), Elektrolytleitungen (3) zur Zu- und Abführung (X) eines oder mehrerer Elektrolyten (33) von einem Vorratstank (31, 32) zu dem elektrochemischen Energiewandler (2) und weiter zurück in den jeweiligen Vorratstank (31, 32) in Form eines Kreislaufprozesses,
wobei der elektrochemische Energiewandler (2) mindestens eine Reaktionszelle mit zwei Elektroden, nämlich Bipolarplatte (25) und/oder Kollektorplatte (26), und einer ionenleitenden Membran (23), bevorzugt eine Vielzahl von elektrisch zusammengeschalteten Reaktionszellen umfasst,
wobei diese bevorzugt mit Elektrolyten (33) in Parallelschaltung versorgt werden, und
die jeweils einen Einlassbereich (301) zur Einleitung des Elektrolyten (33) und einen Auslassbereich (302) zur Ausleitung des Elektrolyten (33) aufweist,
insbesondere nach einem der vorangehenden Ansprüche, **dadurch gekennzeichnet,**
**dass** die Bipolarplatte (25) und/oder Kollektorplatte (26) im Bereich des Einlassbereiches (301) und/oder des Auslassbereiches (302) elektrisch isoliert ausgebildet ist.

5. Durchflussbatterie (1) oder elektrochemischer Energiewandler (2) für eine Durchflussbatterie (1), insbesondere eine Redox-Flow-Batterie, mit einer Zirkulationsanordnung für einen Elektrolyten (33), Elektrolytleitungen (3) zur Zu- und Abführung (X) eines oder mehrerer Elektrolyten (33) von einem Vorratstank (31, 32) zu dem elektrochemischen Energiewandler (2) und weiter zurück in den jeweiligen Vorratstank (31, 32) in Form eines Kreislaufprozesses, wobei der elektrochemische Energiewandler (2) mindestens eine Reaktionszelle mit zwei Elektroden, nämlich Bipolarplatte (25) und/oder Kollektorplatte (26), und einer ionenleitenden Membran (23), bevorzugt eine Vielzahl von elektrisch zusammengeschalteten Reaktionszellen umfasst,
wobei diese bevorzugt mit Elektrolyten (33) in Parallelschaltung versorgt werden, und die jeweils einen Einlassbereich (301) zur Einleitung des Elektrolyten (33) und einen Auslassbereich (302) zur Ausleitung des Elektrolyten (33) aufweist,
insbesondere nach einem der vorangehenden Ansprüche,
**dadurch gekennzeichnet,**
**dass** im Einlassbereich (301) und/oder im Auslassbereich (302), insbesondere in den Zellzuleitungen (332, 342) und/oder der Zellableitungen (334, 344) Stromableiter zur Ableitung von Strömen innerhalb der Elektrolyten (33) vorgesehen sind, wobei die Stromableiter gegenüber der Wirkung des Stroms innert sind.

6. Durchflussbatterie (1) oder elektrochemischer Energiewandler (2) für eine Durchflussbatterie (1), insbesondere eine Redox-Flow-Batterie, mit einer Zirkulationsanordnung für einen Elektrolyten (33), Elektrolytleitungen (3) zur Zu- und Abführung (X) eines oder mehrerer Elektrolyten (33) von einem Vorratstank (31, 32) zu dem elektrochemischen Energiewandler (2) und weiter zurück in den jeweiligen Vorratstank (31, 32) in Form eines Kreislaufprozesses,
wobei der elektrochemische Energiewandler (2) mindestens eine Reaktionszelle mit zwei Elektroden, nämlich Bipolarplatte (25) und/oder Kollektorplatte (26), und einer ionenleitenden Membran (23), bevorzugt eine Vielzahl von elektrisch zusammengeschalteten Reaktionszellen umfasst,
wobei diese bevorzugt mit Elektrolyten (33) in Parallelschaltung versorgt werden, und die jeweils einen Einlassbereich (301) zur Einleitung des Elektrolyten (33) und einen Auslassbereich (302) zur Ausleitung des Elektrolyten (33) aufweist,
insbesondere nach einem der vorangehenden Ansprüche,
**dadurch gekennzeichnet,**
**dass** im Einlassbereich (301) und/oder im Auslassbereich (302), insbesondere in den Zellzuleitungen (332, 342) und/oder der Zellableitungen (334, 344) eine Leitungsdrosselung (361) vorgesehen ist.

7. Durchflussbatterie (1) nach Anspruch 6,
**dadurch gekennzeichnet,**
**dass** die Leitungsdrosselung (361) als einstellbare Leistungsdrosselung (362) ausgebildet ist.

8. Zellrahmen (27) für einen elektrochemischen Energiewandler (2) einer Durchflussbatterie (1), insbesondere nach einem der vorangehenden Ansprüche,
**dadurch gekennzeichnet,**
**dass** der Zellrahmen (27) als Bohrungen ausgebildete Zellzuleitungen (332, 342), Zellableitungen (334, 344), Zufuhrleitungen (331, 341) und/oder Abfuhrleitungen (333, 343) aufweist.

9. Zellrahmen (27) nach Anspruch 8,
**dadurch gekennzeichnet,**
**dass** der Zellrahmen (27) eine Leitungsdrosselung (361), bevorzugt als Bohrungen ausgebildete Zellzuleitungen (332, 342) und/oder Zellableitungen (334, 344) mit unterschiedlichen Bohrlochdurchmessern in Abhängigkeit von dem hydrostatischen Widerstand bedingt durch die Länge der Bohrung und/oder eine einstellbare Leitungsdrosselung (362), insbesondere über regelbare Ventile, aufweist.

10. Zellrahmen (27) für einen elektrochemischen Energiewandler (2) einer Durchflussbatterie (1), insbesondere nach einem der vorangehenden Ansprüche,
**dadurch gekennzeichnet,**
**dass** die Zellzuleitungen (332, 342) und/oder Zellableitungen (334, 344) isoliert ausgebildet sind.

11. Zellrahmen (27) nach Anspruch 8, 9 oder 10,
**dadurch gekennzeichnet,**
**dass** der Zellrahmen (27) Bohrungen als Zufuhrleitung (331, 341) jeweils für den positiven und/oder den negativen Elektrolyten und/oder Abfuhrleitung (333, 343) jeweils für den positiven und/oder den negativen
Elektrolyten aufweist, wobei die jeweilig korrespondierenden Zu- und
Abfuhrleitungen (331/333 sowie 341/343) bevorzugt diagonal gegenüberliegend angeordnet sind.

12. Zellrahmen (27) nach einem der Ansprüche 8 bis 11,
**dadurch gekennzeichnet,**
**dass** der Zellrahmen (27) eine Gummidichtung, insbesondere einen O-Ring (37), als Dichtung zu einem weiteren Zellrahmen (27) aufweist, wobei die Dichtung, insbesondere der oder die O-Ringe, eine Potentialsperre zwischen einer auf dem Zellrahmen aufgebrachten Bipolarplatte (25) und dem Elektrolyten (33, 34) bilden und/oder bevorzugt zusammen mit der Bipolarplatte (25) die Zellrahmen (27) hydraulisch abdichten.

13. Bipolarplatte (25) und/oder Kollektorplatte (26) für einen elektrochemischen Energiewandler (2) einer Durchflussbatterie (1), insbesondere nach einem der Ansprüche 1 bis 7,
**dadurch gekennzeichnet,**
**dass** die Bipolarplatte (25) und/oder Kollektorplatte (26) mindestens in einem Teilbereich (28), bevorzugt in mehreren Teilbereichen (28) isoliert ausgebildet ist, wobei dieser Teil, die Kollektorisolierung (28) im bestimmungsgemäßen Gebrauch im Bereich der Einlassbereiche (301) und/oder der Auslassbereiche (302) angeordnet ist.
